# EUROPEAN PATENT APPLICATION

(11) **EP 4 835 785 A1**
(43) Date of publication of application: **04.11.2026**
(21) Application number: 24911055.2
(22) Date of filing: 23.12.2024
(51) Int. Cl.: G06Q 20/40

(54) **DIGITAL CURRENCY HARDWARE WALLET SETTING UP METHOD AND APPARATUS**

(30) Priority: 29.12.2023 CN 202311861968
(71) Applicant: Digital Currency Institute, The People's Bank of China, Beijing 100073 (CN)
(72) Inventor: MU, Changchun, Beijing 100071 (CN); DI, Gang, Beijing 100071 (CN); LYU, Yuan, Beijing 100071 (CN); PENG, Meiling, Beijing 100071 (CN); BIAN, Yongchao, Beijing 100071 (CN); HU, Qiang, Beijing 100071 (CN); PENG, Chenyi, Beijing 100071 (CN); LIU, Gang, Beijing 100071 (CN); FAN, Yaqi, Beijing 100071 (CN); LIANG, Wei, Beijing 100071 (CN); YAN, Jianli, Beijing 100071 (CN); CUI, Peidong, Beijing 100071 (CN); CHEN, Song, Beijing 100071 (CN); WANG, Rongbing, Beijing 100071 (CN)
(74) Representative: Epping - Hermann - Fischer
(86) International application number: PCT/CN2024/141540
(87) International publication number: WO 2025/140127

(57) **Abstract**

The present disclosure relates to the technical field of computers. Disclosed are a digital currency hardware wallet setting up method and an apparatus. A specific embodiment of the method comprises: in response to a digital currency hardware wallet setting up request, establishing a communication connection with a subscriber identity module card; acquiring a digital currency software wallet associated with a hardware wallet and selected by a user and, on the basis of real-name information of the software wallet and the real-name information of the subscriber identity module card, performing real-name verification; when the real-name verification has passed, sending hardware wallet setting up application information to a wallet operating agency, so that the wallet operating agency generates related hardware wallet data information; and, in response to having received the related hardware wallet data information, writing the related hardware wallet data information into the subscriber identity module card, thus completing hardware wallet setting up. The embodiment allows set up hardware wallets to simultaneously adapt to various operating systems, so that the hardware wallets have a wider range of usage; and enhances the security of using the digital currency hardware wallets.

## Description

### FIELD

The present disclosure relates to the technical field of computers, and in particular to a method and apparatus for creating a digital-currency hardware wallet.

### BACKGROUND

Currently, a hardware carrier of a digital-currency hardware wallet mainly includes an integrated circuit (IC) card (also referred to as a smart card, a microcircuit card, or a microchip card), a wearable device, a securit6 element (SE, refers to a security element, which is a secure memory configured to store critical data) security memory in an Android mobile phone, and the like. When creating a digital-currency hardware wallet, different methods are adopted for different types of hardware carriers. Among these carriers, digital-currency hardware wallets in the IC card and the wearable device are mostly pre-written in and do not support over-the-air downloading. Although the digital-currency hardware wallet in the SE of the Android mobile phone support over-the-air downloading, once the digital-currency hardware wallet is written in, the mobile phone device cannot be replaced, and does not have a real-name verification capability.

In the process of implementing the present disclosure, at least the following problems are found to exist in the conventional technology.

The digital-currency hardware wallet cannot be adapted to various operating systems simultaneously due to limitations of operating system permissions on the hardware carrier of the digital-currency hardware wallet, which imposes certain limitations on the creating of the digital-currency hardware wallet; and the hardware carrier of the digital-currency hardware wallet do not include real-name information, which significantly reduces the security of using the digital-currency hardware wallet.

### SUMMARY

In view of this, a method and apparatus for creating a digital-currency hardware wallet are provided according to the embodiment of the present disclosure, so that the digital-currency hardware wallet can be created based on the user identification card (the SIM card). Owing to the compatibility of the SIM card with mobile phones and other identification devices, the SIM-card hardware wallet can operate across various operating systems, thereby covering all network users and all mobile terminal users. As a result, the created digital-currency hardware wallet can be adapted to multiple operating systems, expanding the application range of the digital-currency hardware wallet. Meanwhile, by using the SIM card as the hardware carrier of the digital-currency hardware wallet and performing real-name verification based on the real-name information of the digital-currency software wallet and the real-name information of the SIM card, the digital-currency hardware wallet is created only when the two pieces of real-name information are consistent, thereby enhancing the security of using the digital-currency hardware wallet.

To achieve the objective described above, according to an aspect of the embodiment of the present disclosure, a method for creating a digital-currency hardware wallet is provided, and the method includes: establishing a communication connection with a user identification card, in response to a request for creating the digital-currency hardware wallet; acquiring a digital-currency software wallet selected by a user and to be associated with the digital-currency hardware wallet, and performing real-name verification based on real-name information of the digital-currency software wallet and real-name information of the user identification card; sending hardware-wallet-creation application information to a wallet operating institution, in response to the real-name verification being passed, to enable the wallet operating institution to generate hardware-wallet-related data information; and writing the hardware-wallet-related data information into the user identification card to complete creation of the digital-currency hardware wallet, in response to receiving the hardware-wallet-related data information.

In an embodiment, the establishing a communication connection with the user identification card includes: performing, for a first type of operating system, command communication with the user identification card through an open mobile interface of a device-card channel of the operating system to establish the communication connection; and performing, for a second type of operating system, command communication with the user identification card through a Bluetooth channel protocol provided by an operator to establish the communication connection

In an embodiment, before the acquiring a digital-currency software wallet selected by a user and to be associated with the digital-currency hardware wallet, the method further includes: verifying that the user identification card supports creating a digital-currency hardware wallet and that a digital-currency software wallet has been created.

In an embodiment, after the establishing a communication connection with a user identification card, the method further includes: acquiring a unique identifier of the user identification card; the performing a real-name verification based on real-name information of the digital-currency software wallet and real-name information of the user identification card including: acquiring the real-name information of the user identification card through a user-identification-card operator based on the unique identifier of the user identification card, and comparing the real-name information of the digital-currency software wallet with the real-name information of the user identification card; and detecting whether there is a created digital-currency hardware wallet is associated with a digital-currency software wallet in the user identification card.

In an embodiment, before the sending hardware-wallet-creation application information to a wallet operating institution, the method further includes: performing user identity verification based on user payment information of the digital-currency software wallet and confirming that the user identity verification is passed; and generating the hardware-wallet-creation application information based on a wallet identifier of the digital-currency software wallet and the real-name information of the digital-currency software wallet.

In an embodiment, the writing the hardware-wallet-related data information into the user identification card includes: sending a data writing instruction to the user identification card to create an auxiliary security domain and writing the hardware-wallet-related data information into the user identification card, wherein the hardware-wallet-related data information comprises hardware-wallet application data, personalization data, and key information.

In an embodiment, after the writing the hardware-wallet-related data information into the user identification card, the method further includes: sending a notification indicating that the writing is successfully completed to a trusted service management platform, and notifying the wallet operating institution through the trusted service management platform.

According to another aspect of the embodiment of the present disclosure, an apparatus for creating a digital -currency hardware wallet is provided, and the apparatus includes: a connection establishment module, is configured to establish a communication connection with a user identification card, in response to a request for creating the digital-currency hardware wallet; a real-name verification module, configured to acquire a digital-currency software wallet selected by a user and to be associated with the digital-currency hardware wallet, and perform real-name verification based on real-name information of the digital-currency software wallet and real-name information of the user identification card; a hardware-wallet-data generation module, configured to send hardware-wallet-creation application information to a wallet operating institution, in response to the real-name verification being passed, to enable the wallet operating institution to generate hardware-wallet-related data information; and a hardware-wallet-data writing module, configured to write the hardware-wallet-related data information into the user identification card to complete creation of the digital-currency hardware wallet, in response to receiving the hardware-wallet-related data information.

According to another aspect of the embodiment of the present disclosure, an electronic device is provided, and the electronic device includes: one or more processors; a storage apparatus, configured to store one or more programs, where the one or more programs, when executed by the one or more processors, cause the one or more processors to implement the method for creating a digital-currency hardware wallet provided in the embodiment of the present disclosure.

According to another aspect of the embodiment of the present disclosure, a computer-readable medium is provided, the computer-readable medium having a computer program stored thereon, where the program, when executed by a processor, performs the method for creating a digital-currency hardware wallet provided in the embodiment of the present disclosure.

The embodiment of the present disclosure described above has the following advantages or beneficial effects. The communication connection is established with the user identity card in response to the request for creating the digital-currency hardware wallet; the digital-currency software wallet selected by the user and to be associated with the digital-currency hardware wallet is acquired, and real-name verification is performed based on real-name information of the digital-currency software wallet and the real-name information of the user identity card; when the real-name verification is passed, hardware-wallet-creation application information is sent to the wallet operating institution, so that the wallet operating institution generates hardware-wallet-related data information; and, in response to receiving the hardware-wallet-related data information, the hardware-wallet-related data information is written into the user identity card, thus completing creation of the digital-currency hardware wallet. The digital-currency hardware wallet can be created based on the user identification card (the SIM card). Owing to the compatibility of the SIM card with mobile phones and other identification devices, the SIM-card hardware wallet can operate across various operating systems, thereby covering all network users and all mobile terminal users. As a result, the created digital-currency hardware wallet can be adapted to multiple operating systems, expanding the application range of the digital-currency hardware wallet. Meanwhile, by using the SIM card as the hardware carrier of the digital-currency hardware wallet and performing real-name verification based on the real-name information of the digital-currency software wallet and the real-name information of the SIM card, the digital-currency hardware wallet is created only when the two pieces of real-name information are consistent, thereby enhancing the security of using the digital-currency hardware wallet.

Further effects of the above-mentioned non-conventional alternations are described below in conjunction with specific implementations.

### BRIEF DESCRIPTION OF THE DRAWINGS

The accompanying drawings are provided for a better understanding of the present disclosure and do not constitute an improper limitation of the present disclosure, where
FIG. 1 is a schematic diagram of main steps of a method for creating a digital-currency hardware wallet according to an embodiment of the present disclosure;
FIG. 2 is a schematic diagram of a writing process of hardware-wallet-related data information according to an embodiment of the present disclosure;
FIG. 3 is a schematic diagram of a writing process of hardware-wallet-related data information according to another embodiment of the present disclosure;
FIG. 4 is an architecture diagram of a creating process of a digital-currency hardware wallet according to an embodiment of the present disclosure;
FIG. 5 is a schematic diagram of main modules of an apparatus for creating a digital-currency hardware wallet according to an embodiment of the present disclosure;
FIG. 6 is an exemplary system architecture diagram in which an embodiment of the present disclosure may be applied; and
FIG. 7 is a schematic structural diagram of a computer system of a terminal device or a server suitable for implementing an embodiment of the present disclosure.

### DETAILED DESCRIPTION

Exemplary embodiments of the present disclosure are described below in combination with the accompanying drawings. In the following description, various details of the embodiments of the present disclosure are included to aid in understanding, and they should be considered as being merely exemplary. Therefore, those of ordinary skill in the art should understand that various changes and modifications can be made to the embodiments described herein without departing from the scope and spirit of the present disclosure. Descriptions of well-known functions and constructions are omitted from the following description, for clarity and conciseness.

It should be noted that in the technical solution disclosed in the present disclosure, all aspects related to the collection, acquisition, updating, analysis, processing, use, transmission, and storage of personal information of users comply with relevant laws and regulations, are used for lawful purposes, and do not violate public order or good morals. Necessary measures are taken to protect personal information of users from unauthorized access, thereby safeguarding the security of personal information of users, network security, and national security.

To address the technical problems in the conventional technology, a method for creating a digital-currency hardware wallet is provided in the present disclosure. A personal digital-currency software wallet can be associated with a user identification card (i.e. a Subscriber Identification Module (SIM) card), and hardware-wallet-related information can be written into the SIM card. During the creating of the digital-currency hardware wallet, the real-name information of the personal digital-currency software wallet is compared with the real-name information of the SIM card from a SIM-card operator to determine whether the two pieces of real-name information are consistent; if so, the creating can be continued. In addition, a SIM-card hardware wallet can be created on different types of operating systems (for example, the Android system, the iOS system, or the like). For different types of operating systems, the SIM card can be accessed by establishing a connection with the SIM card, thereby writing the data information (such as a card application file, personalization data, key information, or the like) related to the digital-currency hardware wallet into the SIM card. During operation, the SIM card is inserted into an identification terminal, such as a mobile phone, capable of recognizing the user identification card, and a digital-currency payment can be completed by tapping on a payment terminal.

In an embodiment of the present disclosure, the digital currency may be, for example, e-CNY (electronic Chinese Yuan). A digital-currency software wallet refers to a digital wallet installed on a mobile device such as a mobile phone, while a digital-currency hardware wallet refers to a wallet that stores and manages digital currency using a physical device. The digital-currency hardware wallet serves as a sub-wallet of the digital-currency software wallet.

In an embodiment of the present disclosure, a user may create a digital-currency hardware wallet online via an application, i.e. APP (such as an e-CNY APP). The APP sends a request to a Trusted Service Manager (TSM) after user information of the user is recognized by the APP. The TSM then requests hardware-wallet application data from the digital-currency wallet operating institution, and then notifies the APP of the mobile phone to write the hardware-wallet application data into the SIM card.

For different operating systems, different methods may be adopted to establish a communication connection between the APP and the user identification card. For example, for the Android system, the APP performs command communication with the SIM card through an open mobile application programming interface (OPEN MOBILE API, OMA) of a device-card channel of the phone system. For the iOS system, the APP is required to pair with a Bluetooth SIM card and performs command communication with the Bluetooth SIM card through a Bluetooth channel protocol provided by an operator.

In an embodiment of the present disclosure, before creating the digital-currency hardware wallet, the real-name information of the account of the personal digital-currency software wallet is compared with the real-name information of the SIM card of the SIM-card operator to determine whether the two pieces of information are consistent. When the two pieces of information are consistent, i.e., a consistence verification is passed, the creating of the digital-currency hardware wallet is started, and hardware-wallet application data, personalization data, and key information are generated. Then, the generated hardware-wallet application data, personalization data, and key information are written into the SIM card. Once the writing is completed, the digital-currency hardware wallet is successfully created.

The SIM-card hardware wallet serves as a sub-wallet of the personal digital-currency software wallet, forming a parent-child relationship with the personal digital-currency software wallet and sharing the balance and payment limit of the digital-currency software wallet. After the SIM-card hardware wallet is created, the identification device into which the SIM card is inserted (for example, a mobile phone, a smart watch, or the like.) is enabled to perform digital-currency payment. The identification device is capable of performing payment in a screen-off state, a screen-on state, and a power-off state, and payment can be completed by tapping the identification device on a point of sale (POS) terminal. The tapping on the POS terminal is performed, if the operating system of the identification device is the Android system and a communication area of the mobile phone determined by the Near Field Communication (NFC) covers the POS terminal; and the tapping on the POS terminal is performed, if the operating system of the identification device is the iOS system and a position of SIM-card slot of the mobile phone is close to the POS terminal. During payment and deduction, the balance is updated by performing deduction from the personal digital-currency software wallet associated with the SIM-card hardware wallet.

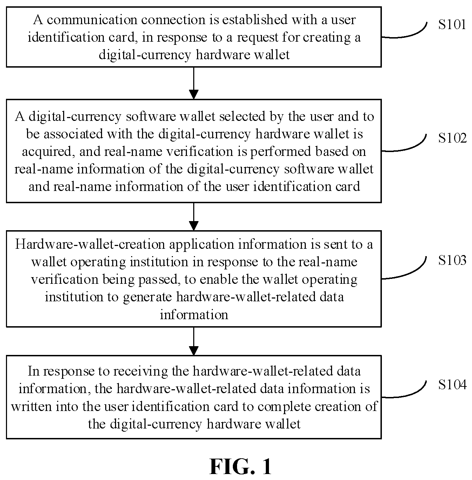

FIG. 1 is a schematic diagram of main steps of a method for creating a digital-currency hardware wallet according to an embodiment of the present disclosure. As shown in FIG. 1, the method for creating a digital-currency hardware wallet according to an embodiment of the present disclosure mainly includes the following steps S101 to S104.

In step S101, a communication connection is established with a user identification card, in response to a request for creating a digital-currency hardware wallet. After the user initiates a request for creating the digital-currency hardware wallet through a digital-currency application program (referred to as APP hereinafter) on the identification terminal of the SIM card (for example, a mobile phone), the APP on the identification terminal of the SIM card is first connected to the SIM card, so as to facilitate subsequent real-name verification and the writing of hardware-wallet-related data information into the SIM card. In addition, after the communication connection is established with the user identification card, a unique identifier of the user identification card may be acquired, such as a number of the user identification card or other information capable of uniquely identifying the user identification card.

According to an embodiment of the present disclosure, establishing a communication connection with the user identification card may specifically include: performing, for a first type of operating system, command communication with the user identification card through an open mobile interface of a device-card channel of an operating system of the identification device to establish the communication connection; and performing, for a second type of operating system, command communication with the user identification card through a Bluetooth channel protocol provided by an operator to establish the communication connection. The first type of operating system may be, for example, an Android system, and the second type of operating system may be, for example, an iOS system.

When the operating system is the Android system, the APP performs command communication with the SIM card via the OMA of the device-card channel of the operating system. When the operating system is the iOS system, the APP is required to pair with a Bluetooth SIM card and performs command communication through a Bluetooth channel protocol provided by the operator. In an embodiment, the user first initiates a Bluetooth search request on the APP, selects a Bluetooth SIM card to be connected, and inputs a Bluetooth pairing code for verification to establish a connection between the APP and the SIM card. If it is a first-time pairing, the pairing code is required to be entered. If the user reconnects to a previously paired Bluetooth SIM card, it is not required to enter the pairing code again. In addition, it is required to support handling of various abnormal situations that may occur when connecting to the SIM card.

In step S102, a digital-currency software wallet selected by the user and to be associated with the digital-currency hardware wallet is acquired, and real-name verification is performed based on real-name information of the digital-currency software wallet and real-name information of the user identification card.

According to an embodiment of the present disclosure, before the acquiring a digital-currency software wallet selected by a user and to be associated with the digital-currency hardware wallet, the method may further include: verifying that the user identification card supports creating of a digital-currency hardware wallet and that a digital-currency software wallet has been created. In other words, after a communication connection is established with the user identification card (e.g. a SIM card), it is first determined whether the SIM card is a device that supports creating of a digital-currency hardware wallet. If so, the user is guided to select a digital-currency software wallet for association. If the user has not created a personal digital-currency software wallet, a digital-currency software wallet is required to be created first. If the SIM card supports creation of the digital-currency hardware wallet and the user has already created at least one software wallet, the user is guided to select a digital-currency software wallet to be associated with the digital-currency hardware wallet to be created. Thereafter, the digital-currency software wallet selected by the user and to be associated with the digital-currency hardware wallet is acquired, and real-name verification is performed.

According to an embodiment of the present disclosure, after the establishing a communication connection with a user identification card, the method further includes: acquiring a unique identifier of the user identification card. Through the unique identifier of the user identification card, the operator of the user identification card can acquire the real-name information of the user identification card. The performing real-name verification based on real-name information of the digital-currency software wallet and real-name information of the user identification card may include: acquiring the real-name information of the user identification card through the user-identification-card operator based on the unique identifier of the user identification card, comparing the real-name information of the digital-currency software wallet with the real-name information of the user identification card; and detecting whether there is a created digital-currency hardware wallet is associated with a digital-currency software wallet in the user identification card. In an embodiment, the APP may invoke a backend service interface of the SIM-card operator, and send mobile-phone number information bound to the digital-currency software wallet and the unique identifier of the SIM card to the SIM-card operator. The SIM-card operator first acquires the mobile-phone number information of the SIM card based on the unique identifier of the SIM card, and then compares the mobile-phone number information bound to the software wallet with the mobile-phone number information of the SIM card to determine whether the two pieces of mobile-phone number information are consistent or in a subsidiary card relationship. If so, it is determined that the real-name information verification is passed. In addition, the SIM-card operator determines whether a digital-currency hardware wallet associated with another software wallet has been previously created in the SIM card. If no hardware wallet associated with another software wallet has been previously created in the SIM card, it indicates that the creation of the digital-currency hardware wallet can be performed.

By using the user identification card as the carrier of the digital-currency hardware wallet, the carrier of the digital-currency hardware wallet is provided with real-name information, enabling real-name verification. As a result, the digital-currency software wallet and the digital-currency hardware wallet maintain consistency in real-name information, thereby greatly enhancing the security of using the digital-currency hardware wallet.

In step S103, hardware-wallet-creation application information is sent to a wallet operating institution in response to the real-name verification being passed, to enable the wallet operating institution to generate hardware-wallet-related data information.

According to an embodiment of the present disclosure, before the sending hardware-wallet-creation application information to a wallet operating institution in response to the real-name verification being passed, the method further includes: performing user identity verification based on user payment information of the digital-currency software wallet and confirming that the user identity verification is passed; and generating the hardware-wallet-creation application information based on a wallet identifier of the digital-currency software wallet and the real-name information of the digital-currency software wallet. In an embodiment, the user payment information may include, for example, a wallet payment password. Upon the real-name verification being passed, the APP will prompt the user to enter the wallet payment password and performs user identity verification based on the wallet payment password. After the user identity verification being passed, the user may sign a payment service agreement with the APP. Thereafter, the application information for activating the hardware wallet is generated based on the wallet identifier and real-name information (for example, a mobile-phone number) of the digital-currency software wallet selected by the user. The hardware-wallet-creation application information may further include, for example, the signed payment service agreement, and the like.

Upon generating the hardware-wallet-creation application information, the hardware-wallet-creation application information may be sent to the wallet operating institution so that the wallet operating institution generates hardware-wallet-related data information and sends the hardware-wallet-related data information to the TSM platform. The TSM platform forwards the hardware-wallet-related data information to the APP after receiving it.

In step S104: in response to receiving the hardware-wallet-related data information, the hardware-wallet-related data information is written into the user identification card to complete creation of the digital-currency hardware wallet.

According to an embodiment of the present disclosure, writing the hardware-wallet-related data information into the user identification card may specifically include: sending a data writing instruction to the user identification card to create an auxiliary security domain and writing the hardware-wallet-related data information into the user identification card, where the hardware-wallet-related data information includes hardware-wallet application data, personalization data, and key information. In an embodiment, upon receiving the hardware-wallet-related data information, the APP sends an Application Protocol Data Unit (APDU) instruction for downloading and installing to the SIM card. The APDU is an information unit for transmision between a smart card and a smart card reader. The APDU instruction for downloading and installing is used for instructing to write the hardware-wallet-related data information into the user identification card.

According to an embodiment of the present disclosure, after the writing the hardware-wallet-related data information into the user identification card, the method further includes: sending a notification indicating that the writing is successfully completed to the TSM platform, and notifying the wallet operating institution through the TSM platform. As such, the hardware wallet is successfully created and can be normally used.

After the SIM-card hardware wallet is successfully created, a mobile phone or other SIM-card identification device into which the SIM card is inserted is enabled to perform digital-currency payment. Silent payment can be performed when the mobile phone is in a screen-off state or powered off, that is, the payment can be completed without invoking the APP or without confirmation on the mobile phone. A Mobile phone using either the Android system or the iOS system supports screen-off payment. Before payment, for a mobile phone with the Android system, a default payment application in the NFC settings is required to be directed to the SIM card, so as to achieve payment by tapping on a POS device; for a mobile phone with the iOS system, NFC settings are not required. For the mobile phone with the Android system, the SIM-card hardware wallet may further be selected in the APP of the mobile phone for performing payment, thereby providing more flexible payment options.

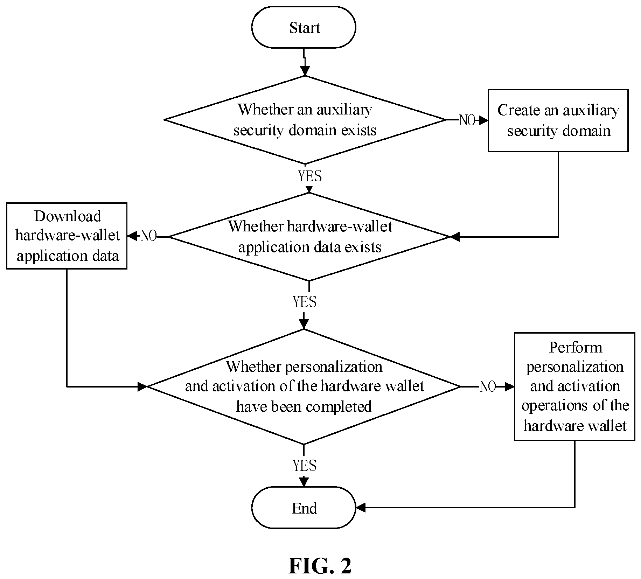

FIG. 2 is a schematic diagram of a writing process of hardware-wallet-related data information according to an embodiment of the present disclosure. As shown in FIG. 2, in this embodiment, a writing process of hardware-wallet-related data information for an Android system is illustrated. The process mainly includes: determining whether an auxiliary secure domain exists; if the auxiliary secure domain does not exist, creating the auxiliary secure domain; if the auxiliary secure domain exists, determining whether hardware-wallet application data exists; if the hardware-wallet application data does not exist, downloading the hardware-wallet application data; if the hardware-wallet application data exists, determining whether personalization and activation of the digital-currency hardware wallet are completed; if personalization and activation of the digital-currency hardware wallet has not been completed, performing personalization and activation for the digital-currency hardware wallet; and if personalization and activation of the digital-currency hardware wallet are completed, it is determined that writing of the hardware-wallet-related data information is completed.

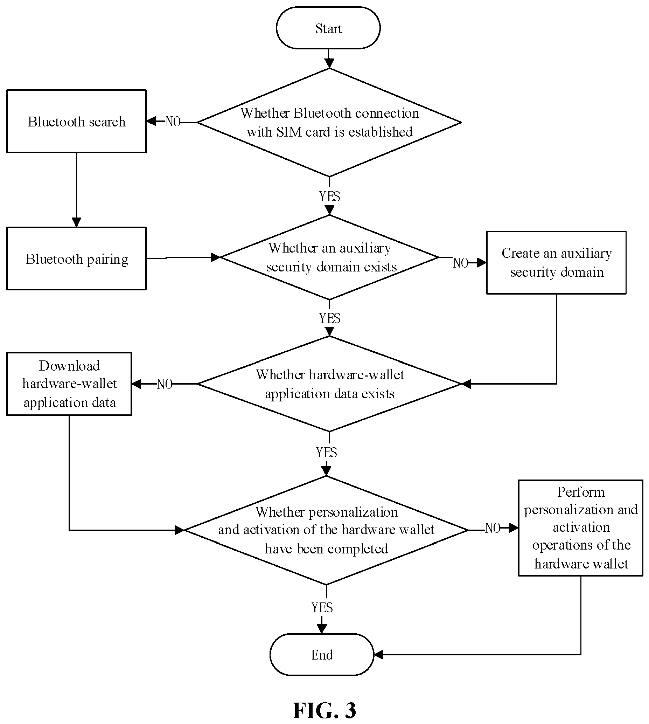

FIG. 3 is a schematic diagram of a writing process of hardware-wallet-related data information according to another embodiment of the present disclosure. As shown in FIG. 3, in this embodiment, a writing process of hardware-wallet-related data information for an iOS system is illustrated. The process mainly includes: determining whether a Bluetooth connection is established with the SIM card; if the Bluetooth connection has not been established, performing Bluetooth search and Bluetooth pairing to establish the Bluetooth connection; if the Bluetooth connection has been established, determining whether an auxiliary secure domain exists; if the auxiliary secure domain does not exist, creating the auxiliary secure domain; if the auxiliary secure domain exists, determining whether hardware-wallet application data exists; if the hardware-wallet application data does not exist, downloading the hardware-wallet application data; if the hardware-wallet application data exists, determining whether personalization and activation of the hardware wallet are completed; if personalization and activation of the digital-currency hardware wallet has not been completed, performing personalization and activation for the digital-currency hardware wallet; and if personalization and activation of the digital-currency hardware wallet are completed, it is determined that the writing of the hardware-wallet-related data information is completed.

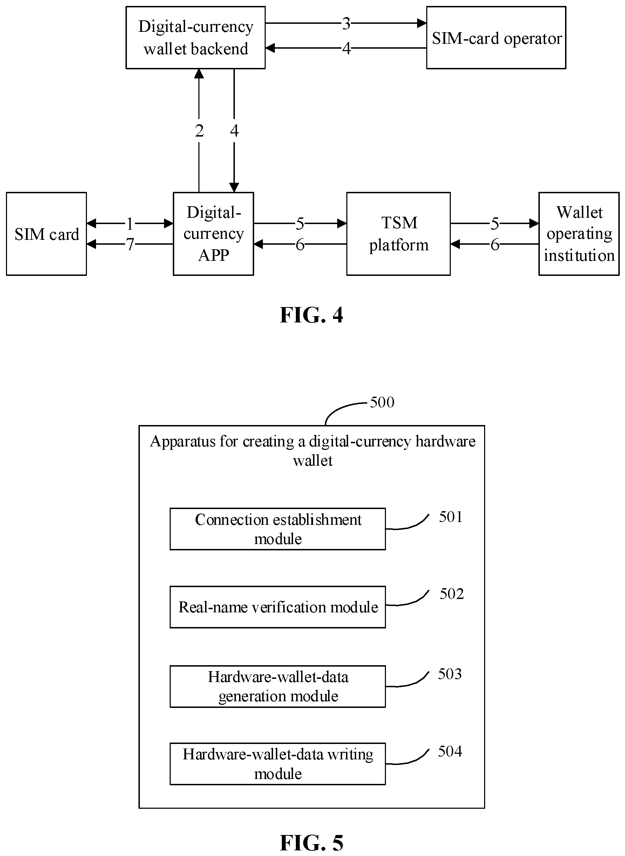

FIG. 4 is a schematic architecture diagram of a creating process of a digital-currency hardware wallet according to an embodiment of the present disclosure. As shown in FIG. 4, the entities mainly involved in creating a digital-currency hardware wallet according to the embodiment of the present disclosure include a digital-currency APP, a digital-currency wallet backend, a TSM platform, a SIM card operator, and a wallet operating institution. The digital-currency APP is configured to initiate an online request for creating a SIM-card hardware wallet and to manage the SIM-card hardware wallet. The digital-currency wallet backend is configured to manage real-name information of the digital-currency software wallet and user payment information. The TSM platform, trusted service management platform, is mainly configured for managing and downloading application data, personalization data, and key information written in the SIM card. The wallet operating institution is for providing the hardware-wallet-creation service and generating application data, personalization data, and key information of the hardware wallet. The SIM card operator includes an operator secure storage module and a SIM-card real-name information management system, and provides comparison related to SIM-card real-name information and authorization for the TSM platform to manage the SIM card space. In addition, the entities involved in creating the digital-currency hardware wallet according to the embodiment of the present disclosure may further include systems such as a service gateway for service routing. Since these systems are not involved in implementing core functions for creating the digital-currency hardware wallet, they are therefore not illustrated in the figure.

The process for creating the digital-currency hardware wallet according to the embodiment of the present disclosure mainly includes the following steps 1 to 7.
1. The digital-currency APP initiates a request of online creating a SIM-card hardware wallet, establishes a communication connection with the SIM card, acquires a unique identifier of the SIM card (for example, the SIM card number, which can uniquely identify the SIM card), and sends the unique identifier of the SIM card to the digital-currency wallet backend.
2. Upon receiving the unique identifier of the SIM card, the digital-currency wallet backend acquires the real-name information of the digital-currency software wallet selected by the user, and generates a real-name verification request based on the unique identifier of the SIM card and the real-name information of the software wallet.
3. The digital-currency wallet backend sends the real-name verification request to the SIM-card operator, to enable the SIM card operator to acquire the real-name information of the SIM card (for example, a phone number) based on the unique identifier of the SIM card and perform real-name verification by comparing the real-name information of the digital-currency software wallet and the real-name information of the SIM card.
4. The SIM-card operator returns the real-name verification result to the digital-currency wallet backend, and the digital-currency wallet backend returns the real-name verification result to the digital-currency APP.
5. The digital-currency APP generates hardware-wallet-creation application information and sends it to the TSM platform, so that the TSM platform forwards the hardware-wallet-creation application information to the wallet operating institution.
6. The wallet operating institution generates the hardware-wallet-related data information and sends it to the TSM platform, so that the TSM platform forwards the hardware-wallet-related data information to the digital-currency APP.
7. The digital-currency APP writes the hardware-wallet-related data information into the SIM card to complete creating the hardware wallet.

FIG. 5 is a schematic diagram of main modules of an apparatus for creating a digital-currency hardware wallet according to an embodiment of the present disclosure. As shown in FIG. 5, the apparatus 500 for creating a digital-currency hardware wallet according to the embodiment of the present disclosure mainly includes a connection establishment module 501, a real-name verification module 502, a hardware-wallet-data generation module 503, and a hardware-wallet-data writing module 504.

The connection establishment module 501 is configured to establish a communication connection with a user identification card, in response to a request for creating the digital-currency hardware wallet.

The real-name verification module 502 is configured to acquire a digital-currency software wallet selected by a user and to be associated with the digital-currency hardware wallet, and perform real-name verification based on real-name information of the digital-currency software wallet and real-name information of the user identification card.

The hardware-wallet-data generation module 503 is configured to send hardware-wallet-creation application information to a wallet operating institution, in response to the real-name verification being passed, to enable the wallet operating institution to generate hardware-wallet-related data information.

The hardware-wallet-data writing module 504 is configured to write the hardware-wallet-related data information into the user identification card to complete creation of the digital-currency hardware wallet, in response to receiving the hardware-wallet-related data information.

According to an embodiment of the present disclosure, the connection establishment module 501 may be further configured to: perform, for a first type of operating system, command communication with the user identification card through an open mobile interface of a device-card channel of the operating system to establish the communication connection; and perform, for a second type of operating system, command communication with the user identification card through a Bluetooth channel protocol provided by an operator to establish the communication connection.

According to another embodiment of the present disclosure, the real-name verification module 502 may be configured to: verify, before acquiring a digital-currency software wallet selected by a user and to be associated with the digital-currency hardware wallet, that the user identification card supports creating a digital-currency hardware wallet and that a digital-currency software wallet has been created.

According to another embodiment of the present disclosure, the real-name verification module 502 may be further configured to: acquire, after the establishing a communication connection with a user identification card, a unique identifier of the user identification card; acquire the real-name information of the user identification card through a user-identification-card operator based on the unique identifier of the user identification card, and compare the real-name information of the digital-currency software wallet with the real-name information of the user identification card; and detect whether there is a created digital-currency hardware wallet is associated with the digital-currency software wallet in the user identification card.

According to another embodiment of the present disclosure, the hardware-wallet-data generation module 503 may be further configured to: before the sending hardware-wallet-creation application information to a wallet operating institution, perform user identity verification based on user payment information of the digital-currency software wallet and confirm that the user identity verification is passed; and generate the hardware-wallet-creation application information based on a wallet identifier of the digital-currency software wallet and the real-name information of the digital-currency software wallet.

According to another embodiment of the present disclosure, the hardware-wallet-data writing module 504 may be further configured to: send a data writing instruction to the user identification card to create an auxiliary security domain and writing the hardware-wallet-related data information into the user identification card, where the hardware-wallet-related data information comprises hardware-wallet application data, personalization data, and key information.

According to another embodiment of the present disclosure, the apparatus 500 for creating a digital-currency hardware wallet further includes a result notification module (not shown in the figure) configured to: after the writing the hardware-wallet-related data information into the user identification card, send a notification indicating that the writing is successfully completed to a trusted service management platform, and notify the wallet operating institution through the trusted service management platform.

According to the technical solution in the present disclosure, the communication connection is established with the user identity card in response to the request for creating the digital-currency hardware wallet; the digital-currency software wallet selected by the user and to be associated with the digital-currency hardware wallet is acquired, and real-name verification is performed based on real-name information of the digital-currency software wallet and the real-name information of the user identity card; when the real-name verification is passed, hardware-wallet-creation application information is sent to the wallet operating institution, to enable the wallet operating institution to generate hardware-wallet-related data information; and, in response to receiving the hardware-wallet-related data information, the hardware-wallet-related data information is written into the user identity card, thus completing creation of the digital-currency hardware wallet. The digital-currency hardware wallet can be created based on the user identification card (the SIM card). Owing to the compatibility of the SIM card with mobile phones and other identification devices, the SIM-card hardware wallet can operate across various operating systems, thereby covering all network users and all mobile terminal users. As a result, the created digital-currency hardware wallet can be adapted to multiple operating systems, expanding the application range of the digital-currency hardware wallet. Meanwhile, by using the SIM card as the hardware carrier of the digital-currency hardware wallet and performing real-name verification based on the real-name information of the digital-currency software wallet and the real-name information of the SIM card, the digital-currency hardware wallet is created only when the two pieces of real-name information are consistent, thereby enhancing the security of using the digital-currency hardware wallet.

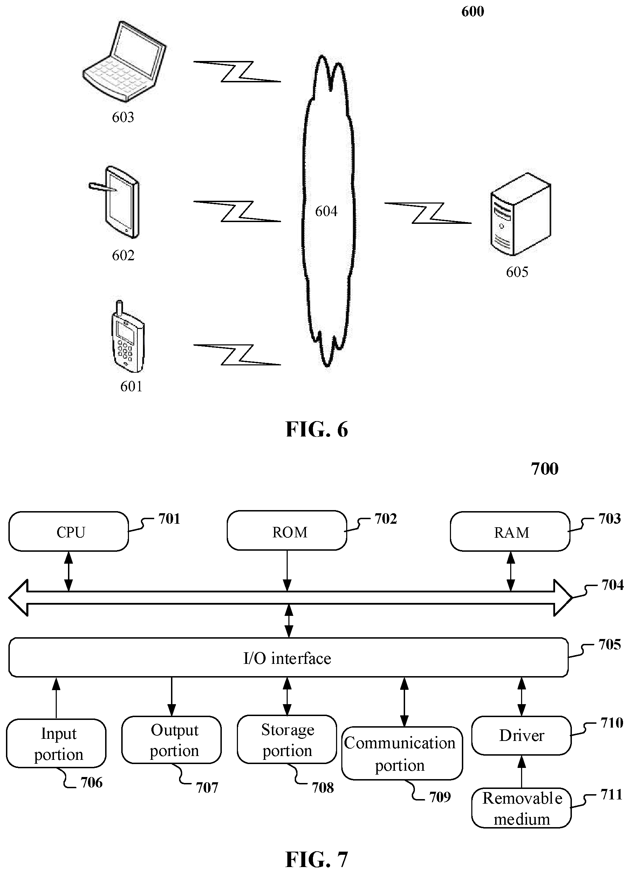

FIG. 6 is an exemplary system architecture 600 in which the method for creating the digital-currency hardware wallet or the apparatus for creating the digital-currency hardware wallet according to the embodiment of the present disclosure may be applied.

As shown in FIG. 6, the system architecture 600 may include terminal devices 601, 602, 603, a network 604, and a server 605. The network 604 is a medium configured to provide communication links among the terminal devices 601, 602, 603, and the server 605. The network 604 may include various connection types, such as wired communication links, wireless communication links, fiber optic cables, or the like.

The terminal devices 601, 602, and 603 may be used by the user to interact with the server 605 through the network 604, to receive or transmit a message, or the like. The terminal devices 601, 602, and 603 may have various communication client applications installed thereon, such as a shopping application, a web browser application, a search application, an instant messaging tool, an email client, social platform software, or the like (as examples only).

The terminal devices 601, 602, and 603 may be various electronic devices that have a display screen and support web browsing, including but not limited to smart phones, tablet computers, laptop computers, desktop computers, or the like.

The server 605 may provide various services, for example, a backend management server (as an example only) that supports websites browsed by a user via the terminal devices 601, 602, and 603. The backend management server may process data such as the received a request for creating a digital-currency hardware wallet by: establishing a communication connection with a user identification card, in response to a request for creating a digital-currency hardware wallet; acquiring a digital-currency software wallet to be associated with the digital-currency hardware wallet and selected by the user, and performing real-name verification based on real-name information of the digital-currency software wallet and real-name information of the user identification card; sending hardware-wallet-creation application information to a wallet operating institution, in response to the real-name verification being passed, to enable the wallet operating institution to generate data information related to the hardware wallet; and writing the hardware-wallet-related data information into the user identification card to complete the creation of the digital-currency hardware wallet and returning the processing result (such as the hardware-wallet-creation result, by way of example) to the terminal device, in response to receiving the hardware-wallet-related data information.

It should be noted that the method for creating a digital-currency hardware wallet provided by the embodiment of the present disclosure is generally executed by the server 605. Correspondingly, the apparatus for creating a digital-currency hardware wallet is generally arranged in the server 605.

It should be understood that the numbers of terminal devices, networks and servers shown in FIG. 6 are illustrative only. Depending on implementation needs, any number of terminal devices, networks, and servers may be provided.

Reference is made to FIG. 7, which shows a schematic structural diagram of a computer system 700 of a terminal device or server suitable for implementing the embodiment of the present disclosure. The terminal device or server shown in FIG. 7 is only an example, and should not be a limitation to a function or usage scope of the embodiments of the present disclosure.

As shown in FIG. 7, the computer system 700 includes a central processing unit (CPU) 701, which may execute various appropriate actions and processes according to a program stored in a read-only memory (ROM) 702 or a program loaded from a storage portion 708 to a random-access memory (RAM) 703. Various programs and data required for the operation of the system 700 are further stored in the RAM 703. The CPU 701, the ROM 702 and the RAM 703 are connected to each other via a bus 704. An input/output (I/O) interface 705 is connected to the bus 704.

The following components are connected to the I/O interface 705: an input portion 706 including a keyboard, a mouse, or the like; an output portion 707 including a cathode ray tube (CRT), a liquid crystal display (LCD), a speaker, or the like; a storage portion 708 including a hard disk, or the like; and a communication portion 709 including a network interface card, such as a LAN card, a modem, or the like. The communication portion 709 performs communication processing via a network, such as the Internet. A driver 710 may be connected to the I/O interface 705 as required. A removable medium 711, such as a magnetic disk, an optical disk, a magnetic optical disk, a semiconductor memory, or the like, is installed on the driver 710 as required, so that a computer program read therefrom is installed on the storage portion 708 as required.

Particularly, according to an embodiment of the present disclosure, the foregoing process described with reference to the flowchart may be implemented as a computer software program. For example, the embodiment disclosed in the present disclosure includes a computer program product including a computer program carried on a computer-readable medium, where the computer program includes program code configured to execute the method illustrated in the flowchart. In such an embodiment, the computer program may be downloaded and installed from a network via the communication portion 709, and/or may be installed from the removable medium 711. When the computer program is executed by the central processing unit (CPU) 701, the functions defined in the system of the present disclosure are executed.

It should be noted that the computer-readable medium shown in the present disclosure may be a computer-readable signal medium or a computer-readable storage medium, or any combination thereof. The computer-readable storage medium may include, but is not limited to, a system, an apparatus, or a device in an electronic, magnetic, optical, electromagnetic, infrared, or semi-conductive form, or any combination thereof. More specific examples of the computer-readable storage medium may include, but are not limited to, an electrical connection with one or more wires, a portable computer disk, a hard disk, a random-access memory (RAM), a read-only memory (ROM), an erasable programmable read-only memory (EPROM or a flash memory), an optical fiber, a portable compact disc read-only memory (CD-ROM), an optical storage device, a magnetic storage device or any suitable combination thereof. In the present disclosure, the computer-readable storage medium may be any tangible medium including or storing a program, and the program may be used by or in combination with an instruction execution system, apparatus, or device. In the present disclosure, a computer-readable signal medium may include a data signal propagated in baseband or as part of a carrier wave. The data signal carries computer-readable program codes. The propagated data signal may be in various forms, including but not limited to an electromagnetic signal, an optical signal or any suitable combination thereof. The computer-readable signal medium may further be any computer-readable medium other than the computer-readable storage medium. The computer-readable medium is capable of sending, propagating, or transmitting a program to be used by, or in connection with, an instruction execution system, apparatus, or device. The program codes included in the computer-readable medium may be transmitted using any suitable medium, including but not limited to a wireless medium, a wire, an optical fiber cable, an RF or the like, or any suitable combination of the above.

Flowcharts and block diagrams in the drawings illustrate architectures, functions and operations that can be implemented by the system, method and computer program product according to the embodiments of the present disclosure. Each of the blocks in the flowcharts or the block diagrams may represent a module, a program segment, or a part of codes, and the module, the program segment or the part of codes includes one or more executable instructions for implementing a specified logical function. It should be noted that, in some alternative implementations, the functions marked in blocks may be performed in an order different from the order shown in the drawings. For example, two blocks shown in succession may actually be executed in parallel, or sometimes may be executed in a reverse order, which depends on functions involved. It should be noted that each of the blocks in the block diagrams and/or the flowcharts and a combination of blocks in the block diagrams and/or the flowcharts may be implemented by dedicated hardware-based systems configured to perform the specified functions or operations, or by a combination of dedicated hardware and computer instructions.

The units or modules mentioned in the description of the embodiments of the present disclosure may be implemented by means of software, or may be implemented by means of hardware. The described units or modules may be arranged in a processor. For example, it may be described as: a processor including a connection establishment module, a real-name verification module, a hardware wallet data generation module, and a hardware wallet data writing module. It should be noted that the names of these units or modules do not, in certain circumstances, limit the units or modules themselves. For example, the connection establishment module may also be described as "a module configured to establish a communication connection with a user identification card in response to a digital-currency hardware wallet creating request."

In another aspect, a computer-readable medium is further provided in the present disclosure. The computer-readable medium may be included in the device described in the foregoing embodiments, or may be standalone, rather than being assembled in the device. The computer-readable medium carries one or more programs. The computer-readable medium described above carries one or more programs, and when the one or more programs are executed by the device, the device is caused to include: establishing a communication connection with a user identification card, in response to a request for creating the digital-currency hardware wallet; acquiring a digital-currency software wallet selected by a user and to be associated with the digital-currency hardware wallet, and performing real-name verification based on real-name information of the digital-currency software wallet and real-name information of the user identification card; sending hardware-wallet-creation application information to a wallet operating institution, in response to the real-name verification being passed, to enable the wallet operating institution to generate hardware-wallet-related data information; and writing the hardware-wallet-related data information into the user identification card to complete creation of the digital-currency hardware wallet, in response to receiving the hardware-wallet-related data information.

According to the technical solution in the present disclosure, the communication connection is established with the user identity card in response to the request for creating the digital-currency hardware wallet; the digital-currency software wallet selected by the user and to be associated with the digital-currency hardware wallet is acquired, and real-name verification is performed based on real-name information of the digital-currency software wallet and the real-name information of the user identity card; when the real-name verification is passed, hardware-wallet-creation application information is sent to the wallet operating institution, so that the wallet operating institution generates hardware-wallet-related data information; and, in response to receiving the hardware-wallet-related data information, the hardware-wallet-related data information is written into the user identity card, thus completing creation of the digital-currency hardware wallet. The digital-currency hardware wallet can be created based on the user identification card (the SIM card). Owing to the compatibility of the SIM card with mobile phones and other identification devices, the SIM-card hardware wallet can operate across various operating systems, thereby covering all network users and all mobile terminal users. As a result, the created digital-currency hardware wallet can be adapted to multiple operating systems, expanding the application range of the digital-currency hardware wallet. Meanwhile, by using the SIM card as the hardware carrier of the digital-currency hardware wallet and performing real-name verification based on the real-name information of the digital-currency software wallet and the real-name information of the SIM card, the digital-currency hardware wallet is created only when the two pieces of real-name information are consistent, thereby enhancing the security of using the digital-currency hardware wallet.

The above specific embodiments are not intended to limit the protection scope of the present disclosure. It should be understood by those skilled in the art that various modifications, combinations, sub combinations and alternations may be made depending on a design requirement and other factors. Any modification, equivalent substitution and improvement made within the spirit and principle of the present disclosure should be included in the protection scope of the present disclosure.

### Industrial applicability

The solution provided by the embodiments of the present disclosure may be applied to the technical field of computers. In the embodiments of the present disclosure, the communication connection is established with the user identity card in response to the request for creating the digital-currency hardware wallet; the digital-currency software wallet selected by the user and to be associated with the digital-currency hardware wallet is acquired, and real-name verification is performed based on real-name information of the digital-currency software wallet and the real-name information of the user identity card; when the real-name verification is passed, hardware-wallet-creation application information is sent to the wallet operating institution, so that the wallet operating institution generates hardware-wallet-related data information; and, in response to receiving the hardware-wallet-related data information, the hardware-wallet-related data information is written into the user identity card, thus completing creation of the digital-currency hardware wallet. This embodiment enables the created digital-currency hardware wallet to be adapted to multiple operating systems, expanding the application range of the digital-currency hardware wallet, and enhancing the security of using the digital-currency hardware wallet.

## Claims

1. A method for creating a digital-currency hardware wallet, comprising:
establishing a communication connection with a user identification card, in response to a request for creating the digital-currency hardware wallet;
acquiring a digital-currency software wallet selected by a user and to be associated with the digital-currency hardware wallet, and performing real-name verification based on real-name information of the digital-currency software wallet and real-name information of the user identification card;
sending hardware-wallet-creation application information to a wallet operating institution, in response to the real-name verification being passed, to enable the wallet operating institution to generate hardware-wallet-related data information; and
writing the hardware-wallet-related data information into the user identification card to complete creation of the digital-currency hardware wallet, in response to receiving the hardware-wallet-related data information.

2. The method according to claim 1, wherein the establishing a communication connection with a user identification card comprises:
performing, for a first type of operating system, command communication with the user identification card through an open mobile interface of a device-card channel of the operating system to establish the communication connection; and
performing, for a second type of operating system, command communication with the user identification card through a Bluetooth channel protocol provided by an operator to establish the communication connection.

3. The method according to claim 1, wherein before the acquiring a digital-currency software wallet selected by a user and to be associated with the digital-currency hardware wallet, the method further comprises:
verifying that the user identification card supports creating a digital-currency hardware wallet and that a digital-currency software wallet has been created.

4. The method according to claim 1, wherein after the establishing a communication connection with a user identification card, the method further comprises:
acquiring a unique identifier of the user identification card;
the performing a real-name verification based on real-name information of the digital-currency software wallet and real-name information of the user identification card comprising:
acquiring the real-name information of the user identification card through a user-identification-card operator based on the unique identifier of the user identification card, and comparing the real-name information of the digital-currency software wallet with the real-name information of the user identification card; and
detecting whether there is a created digital-currency hardware wallet is associated with a digital-currency software wallet in the user identification card.

5. The method according to claim 1, wherein before the sending hardware-wallet-creation application information to a wallet operating institution, the method further comprises:
performing user identity verification based on user payment information of the digital-currency software wallet and confirming that the user identity verification is passed; and
generating the hardware-wallet-creation application information based on a wallet identifier of the digital-currency software wallet and the real-name information of the digital-currency software wallet.

6. The method according to claim 1, wherein the writing the hardware-wallet-related data information into the user identification card comprises:
sending a data writing instruction to the user identification card to create an auxiliary security domain and writing the hardware-wallet-related data information into the user identification card, wherein the hardware-wallet-related data information comprises hardware-wallet application data, personalization data, and key information.

7. The method according to claim 1, wherein after the writing the hardware-wallet-related data information into the user identification card, the method further comprises:
sending a notification indicating that the writing is successfully completed to a trusted service management platform, and notifying the wallet operating institution through the trusted service management platform.

8. An apparatus for creating a digital-currency hardware wallet, comprising:
a connection establishment module, is configured to establish a communication connection with a user identification card, in response to a request for creating the digital-currency hardware wallet;
a real-name verification module, configured to acquire a digital-currency software wallet selected by a user and to be associated with the digital-currency hardware wallet, and perform real-name verification based on real-name information of the digital-currency software wallet and real-name information of the user identification card;
a hardware-wallet-data generation module, configured to send hardware-wallet-creation application information to a wallet operating institution, in response to the real-name verification being passed, to enable the wallet operating institution to generate hardware-wallet-related data information; and
a hardware-wallet-data writing module, configured to write the hardware-wallet-related data information into the user identification card to complete creation of the digital-currency hardware wallet, in response to receiving the hardware-wallet-related data information.

9. An electronic device, comprising:
one or more processors;
a storage apparatus, configured to store one or more programs, wherein
the one or more programs, when executed by the one or more processors, cause the one or more processors to implement the method according to any one of claims 1 to 7.

10. A computer-readable medium having a computer program stored thereon, wherein the program, when executed by a processor, performs the method according to any one of claims 1 to 7.
